# FASCICULE DE BREVET EUROPEEN

(11) **EP 2 882 568 B1**
(45) Date de publication et mention de la délivrance du brevet: **03.08.2016**
(21) Numéro de dépôt: 13739753.5
(22) Date de dépôt: 17.06.2013
(51) Int. Cl.: B23P 21/00, B23K 37/04, B62D 65/06, B23Q 7/14

(54) **PROCÉDÉ ET INSTALLATION DE SOUDAGE D'ÉLÉMENTS DE CARROSSERIE AUTOMOBILE AVEC CHANGEMENT RAPIDE D'OUTIL PAR ROTONDE ÉLÉVATRICE**
VERFAHREN UND VORRICHTUNG ZUM SCHWEISSEN VON KAROSSERIEELEMENTEN EINES KRAFTFAHRZEUGS MIT SCHNELLEM WERKZEUGWECHSEL ANHAND EINES HUBREVOLVERKOPFES
METHOD AND UNIT FOR WELDING MOTOR VEHICLE BODY ELEMENTS, INCLUDING RAPID TOOL CHANGE BY MEANS OF A HOISTING TURRET

(30) Priorité: 07.08.2012 FR 1257659
(43) Date de publication de la demande: 17.06.2015
(73) Titulaire: Peugeot Citroën Automobiles SA, 78140 Vélizy Villacoublay (FR)
(72) Inventeur: EPERT, Didier, F-22190 Plerin (FR); MARTINA, Bruno, F-25550 Issans (FR); LAUTRAM, Daniel, F-35580 Guignen (FR)
(74) Mandataire: Fosse, Danièle
(86) Numéro de dépôt international: PCT/FR2013/051410
(87) Numéro de publication internationale: WO 2014/023880

(56) Documents cités:
- EP-A1- 2 149 422
- EP-A2- 1 873 045
- DE-A1- 10 233 084
- US-A1- 2008 220 955

## Description

La présente invention se rapporte au domaine général des chaînes d'assemblage d'éléments de carrosserie destinées à équiper notamment, mais non exclusivement, les usines de fabrication de véhicules.

En particulier la présente invention concerne une installation destinée à l'assemblage de pièces de carrosserie selon le préambule de la revendication 1 et un procédé d'assemblage de pièces de carrosserie selon le préambule de la revendication 8.

Elle concerne plus particulièrement un agencement d'installation d'assemblage par soudage adaptée à la fabrication de côtés de caisse destinés à des véhicules automobiles, ainsi qu'un procédé d'assemblage pouvant être mis en oeuvre au moyen d'une telle installation.

Il est connu d'utiliser des chaînes automatisées pour l'assemblage d'éléments de carrosserie.

Généralement, les pièces à assembler sont disposées sur un outil de conformation, qui comprend un châssis portant divers organes de positionnement et de bridage, tels que chandelles, sauterelles, etc., de sorte à permettre le maintien provisoire desdites pièces dans leur configuration d'assemblage, avant leur fixation définitive, par exemple par soudage.

Bien entendu, il est nécessaire d'adapter l'outil de conformation au modèle et à la silhouette du véhicule concerné (berline, coupé, monospace, break, etc.), et plus particulièrement de procéder à un remplacement d'outil en cas de changement de gamme de fabrication.

A cet effet, il est connu de prévoir au bord de la ligne d'assemblage des aires de stockage comprenant une rangée de plateaux fixes de stockage sur lesquels un robot manipulateur, du genre bras robotisé multi-axes, peut déposer un outil retiré de la ligne, puis prélever un autre outil destiné à le remplacer sur ladite ligne.

Si de telles installations donnent généralement satisfaction, elles peuvent toutefois souffrir de certains inconvénients.

En particulier, si les bras robotisés présentent généralement une bonne précision et une excellente reproductivité, ils peuvent présenter certaines limites quant à leur capacité de portage, ou bien quant à leur vitesse d'exécution, notamment lorsqu'ils doivent transporter une forte charge possédant une importante inertie.

La durée du changement de l'outil peut alors parfois engendrer des temps morts, préjudiciables à la cadence de production.

En outre, la multiplication des magasins de stockage et des robots manipulateurs le long de la ligne tend à augmenter significativement l'encombrement au sol de ladite ligne, ainsi que son coût d'implantation et de fonctionnement.

Il est par ailleurs connu, notamment par le document US-2008/0220955, qui décrit les préambules des revendications 1 et 8, d'utiliser, à l'extrémité de rails de convoyage menant au poste d'assemblage, un magasin rotatif, de type rotonde, qui embarque une pluralité de plateaux qui sont montés mobiles sur une pluralité de rails de stockage et qui peuvent recevoir chacun un outil de conformation et un jeu de pièces à assembler.

Pour changer d'outil, il est nécessaire de rappeler sur la rotonde le plateau engagé sur la ligne, de faire pivoter l'ensemble des plateaux afin d'aligner celui portant l'outil approprié avec les rails de convoyage, puis d'engager ce nouveau plateau sur ledit convoyeur afin de l'acheminer vers le poste concerné.

Or, une telle solution de stockage et de manutention peut également présenter certains inconvénients.

En premier lieu, elle nécessite le déplacement systématique, à chaque changement d'outil, de l'ensemble du magasin rotatif, chargé de ses plateaux de convoyage et des outils embarqués sur ceux-ci. La mise en mouvement d'un ensemble aussi lourd requiert donc une importante dépense d'énergie, et peut nécessiter un ralentissement de cadence afin de conserver le contrôle dudit déplacement au regard des effets inertiels.

Ensuite, l'utilisation d'un magasin tournant nécessite de dégager un grand espace au sol pour permettre le déplacement des plateaux, sans interférence avec l'environnement dudit magasin, et en particulier avec les robots voisins ou les rails de convoyage. Or, un tel étalement est bien entendu contradictoire avec le souhait d'obtenir une installation compacte afin de maximiser la densité de surface productive au sein de l'usine concernée.

Enfin, quelle que soit la solution envisagée, le transfert de l'outil de conformation depuis le magasin d'outil jusqu'au poste d'assemblage induit nécessairement un changement de référentiel mécanique, et peut donc présenter des difficultés en matière de précision et de reproductibilité de positionnement de l'outil vis-à-vis des robots d'assemblage.

Ici encore, il est nécessaire de trouver un compromis, parfois décevant, entre la précision effective de positionnement, et donc qualité de l'assemblage, la complexité et l'encombrement de l'installation liés à l'ajout éventuel de dispositifs d'alignement permettant d'améliorer ladite précision, et la vitesse d'exécution qui peut être influencée par la mise en oeuvre de tels dispositifs d'alignement supplémentaires.

Les objets assignés à l'invention visent par conséquent à remédier aux inconvénients susmentionnés, et à proposer une nouvelle installation et un nouveau procédé d'assemblage qui permettent, pour un coût et un encombrement modérés, de réaliser une production fiable à une cadence élevée.

Les objets assignés à l'invention sont atteints à l'aide d'une installation destinée à l'assemblage de pièces de carrosserie, ladite installation comprenant au moins un poste d'assemblage pourvu de moyens automatiques d'assemblage, du genre robots de soudage, un poste de chargement pourvu de moyens de chargement de pièces destinés à alimenter l'installation en pièces à assembler, un convoyeur permettant d'acheminer, depuis le poste de chargement jusqu'au poste d'assemblage, un outil de conformation conçu pour l'accueil, la conformation et le bridage, selon une configuration d'assemblage prédéterminée, d'au moins un jeu de pièces détachées devant être assemblées les unes aux autres, ladite installation étant caractérisée en ce qu'elle comporte un poste d'échange automatique d'outil de conformation qui comprend une tourelle rotative élévatrice à axe vertical, ladite tourelle possédant d'une part un rotor de manutention, d'axe de rotation sensiblement vertical, qui présente une pluralité de porte-outils répartis autour dudit axe et conçus pour accueillir chacun un outil de conformation, ledit rotor étant agencé de sorte à pouvoir amener sélectivement, par un déplacement angulaire approprié autour de son axe, chaque porte-outil à l'aplomb du convoyeur, et d'autre part au moins un organe élévateur permettant de déplacer verticalement au moins le porte-outil situé à l'aplomb du convoyeur de sorte à pouvoir alternativement retirer un outil présent sur ledit convoyeur ou déposer un nouvel outil sur ledit convoyeur.

Les objets assignés à l'invention sont également atteints à l'aide d'un procédé d'assemblage de pièces de carrosserie comprenant une étape de sélection d'un outil de conformation, au cours de laquelle on met en place sur un convoyeur un outil de conformation conçu pour l'accueil, la conformation et le bridage, selon une configuration d'assemblage prédéterminée, d'au moins un jeu de pièces détachées devant être assemblées les unes aux autres, une étape de chargement au cours de laquelle on met en place les pièces à assembler sur ledit outil de chargement selon ladite configuration d'assemblage, puis une étape d'assemblage au cours de laquelle on fixe lesdites pièces les unes aux autres, par exemple par soudage, selon ladite configuration d'assemblage, ledit procédé étant caractérisé en ce que l'étape de sélection comprend une sous-étape de permutation d'outil au cours de laquelle on fait tourner un rotor de manutention à axe sensiblement vertical possédant une pluralité de porte-outils, conçus pour accueillir chacun un outil de conformation, de sorte à amener à l'aplomb du convoyeur celui des porte-outils sur lequel est embarqué l'outil de conformation souhaité, puis une étape de déplacement vertical, de préférence de descente, au cours de laquelle on déplace verticalement le porte-outil de sorte à déposer l'outil de conformation sélectionné sur le convoyeur.

Avantageusement, la mobilité accrue de la tourelle de manutention conforme à l'invention, qui conjugue un magasin tournant, permettant une répartition équilibrée et sensiblement horizontale des porte-outils, avec un élévateur vertical, offre tout d'abord un gain de place significatif, puisque le magasin peut avantageusement surplomber au moins en partie le convoyeur, et en particulier se déplacer en rotation sans interférer avec ce dernier, ce qui permet d'étager verticalement différentes fonctions de la ligne d'assemblage, et plus particulièrement du poste d'échange automatique d'outil, selon différents niveaux superposés.

En outre, l'invention permet de combiner d'une part la puissance, la stabilité et le bon équilibrage du rotor de manutention, avec d'autre part des trajectoires, de sélection rotatives, puis d'accostage sensiblement verticales, pour la mise en place ou l'enlèvement des outils sur le convoyeur, qui sont particulièrement courtes et précises.

De surcroît, la composante verticale de déplacement permet de réaliser une approche d'outil à la fois simple et rapide, selon une trajectoire relativement dégagée et facile à maîtriser, et qui est par conséquent sûre, précise et reproductible.

Enfin, l'invention permet également, tel que cela sera détaillé plus bas, d'alléger la charge mobile embarquée sur le rotor, en limitant les transferts depuis et vers le convoyeur aux seuls outils de conformation, sans accessoires superflus de type chariots.

Tous ces éléments concourent avantageusement à une amélioration de la cadence de production, en permettant une augmentation de la vitesse d'exécution des mouvements de sélection et de transfert d'outil et/ou une réduction de l'ampleur ou de la fréquence desdits mouvements, desquelles résultent une réduction des temps improductifs de changement d'outil, et par conséquent, plus globalement, un accroissement de la capacité de production de l'installation.

En outre, l'agencement conforme à l'invention permet de limiter la surface nécessaire à l'implantation de l'installation, ainsi que la complexité et la quantité des postes qui la constituent, ce qui permet de réaliser une économie substantielle aussi bien lors de la réalisation que de l'utilisation de ladite installation.

D'autres objets, caractéristiques et avantages de l'invention apparaîtront plus en détail à la lecture de la description qui suit, ainsi qu'à l'aide des dessins annexés, fournis à titre purement illustratif et non limitatif, parmi lesquels :
La figure 1 illustre, selon une vue d'ensemble en perspective, un exemple de réalisation d'installation conforme à l'invention.
Les figures 2A, 2B et 2C illustrent, selon des vues de dessus, des pièces de carrosserie, de type anneau arrière, anneau avant et peau, destinées à être assemblées les unes aux autres par l'installation objet de l'invention.
La figure 3 illustre, selon une vue en perspective, un exemple de poste de changement d'outil conforme à l'invention, avec une tourelle portant quatre porte-outils, dont le premier assure ici la dépose d'un outil sur le convoyeur.
La figure 4 illustre, selon une vue en perspective, le détail d'un porte-outil conforme à l'invention, pourvu de billes porteuses facilitant le centrage de l'outil par rapport au convoyeur.
Les figures 5A et 5B illustrent, selon des vues schématiques de côté, prises dans l'axe du convoyeur, le principe d'auto-centrage de l'outil sélectionné lors de la descente du porte outil et de la prise de contact avec le chariot du convoyeur.
La figure 6 illustre, selon une vue en perspective de dessous, un exemple de réalisation d'outil de conformation pouvant être utilisé dans une installation conforme à l'invention.
Les figures 7A et 7B illustrent, selon des vues de côté, prises dans l'axe du convoyeur, la mise en oeuvre, à des altitudes différentes, d'opérations successives de pointage puis de finition par un robot de soudage, sur un même poste d'assemblage.

La présente invention concerne une installation 1 destinée à l'assemblage de pièces de carrosserie 2, 3, 4.

De préférence, lesdites pièces de carrosserie 2, 3, 4 seront en métal, et notamment en métal soudable, bien qu'il ne soit pas exclu qu'elles puissent être en verre, notamment feuilleté, en polymère, du genre polycarbonate ou polypropylène, voire en matériau composite, par exemple à matrice époxy renforcée par des fibres de verre, de carbone ou d'aramide.

Elles pourront notamment avoir été préformées par moulage ou emboutissage.

Lesdites pièces de carrosserie 2, 3, 4 seront de préférence destinée à réaliser des pans de carrosserie ou d'habillage de véhicules, de préférence de véhicules automobiles, et notamment de véhicules terrestres.

L'installation peut alors former une installation d'assemblage de véhicules automobiles, bien qu'il ne soit pas exclu de mettre en oeuvre une installation selon le principe de l'invention pour la réalisation d'autres structures, notamment métalliques, éventuellement dans d'autres domaines industriels, tels que par exemple celui de l'aéronautique.

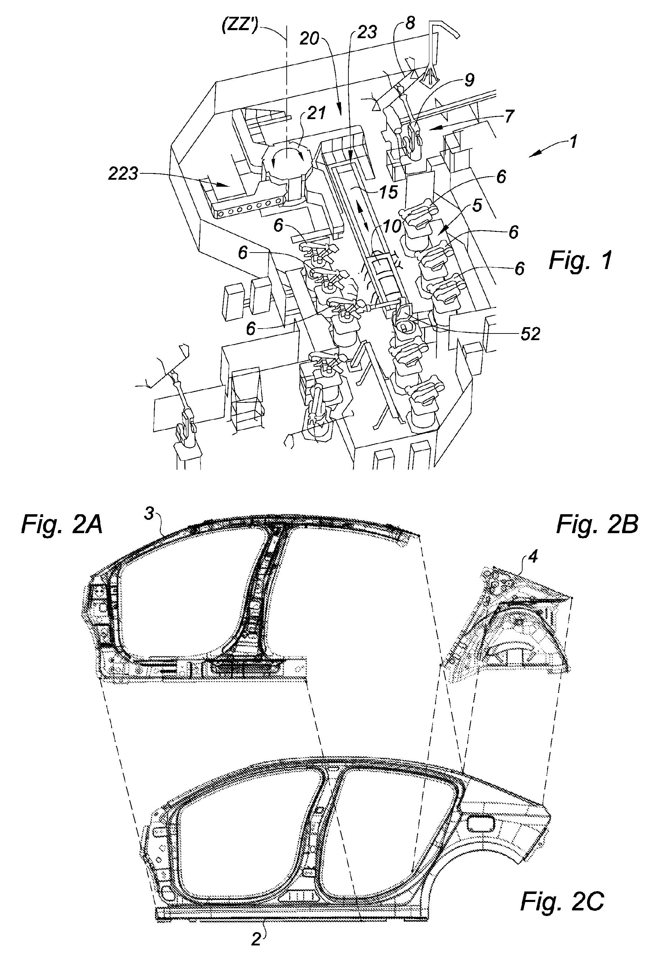

Plus particulièrement, l'installation 1 peut être destinée à l'assemblage de côtés de caisse, comprenant au moins une première pièce 2 de tôle formant peau (figure 2C), une seconde pièce 3 formant renfort, de type anneau avant (figure 2A), et une troisième pièce 4 formant renfort, de type anneau arrière (figure 2B).

Selon l'invention, tel que cela est visible sur la figure 1, ladite installation 1 comprend au moins un poste d'assemblage 5 pourvu de moyens automatiques d'assemblage 6, du genre robots de soudage.

L'installation 1 pourra ainsi former un îlot de soudage, la ligne de fabrication pouvant au besoin comprendre deux îlots de soudage symétriques, l'un pour réaliser le côté de caisse gauche, l'autre pour réaliser le côté de caisse droit.

De préférence chaque poste, et plus globalement l'installation 1 dans son ensemble, sera automatisé(e), afin de garantir une cadence élevée de production, avec une bonne reproductibilité.

Bien entendu, l'invention n'est nullement limitée à un type d'assemblage particulier, le ou les postes d'assemblage 5 pouvant comprendre, seul ou en combinaison, tout moyen d'assemblage permettant de réaliser une jonction mécanique permanente entre au moins deux pièces de carrosserie 2, 3, 4, par exemple par soudage (par points et/ou en cordon), brasage, collage, rivetage, etc.

Selon l'invention, l'installation 1 comprend également un poste de chargement 7 pourvu de moyens de chargement 8, 9 de pièces destinés à alimenter l'installation en pièces à assembler.

Lesdits moyens de chargement pourront notamment comprendre au moins un magasin de pièces 8 ainsi qu'un bras de chargement 9 robotisé multi-axes, du genre robot à six axes, conçu pour prélever les pièces 2, 3, 4 nécessaires dans le stock du magasin 8 et les transférer sur la ligne d'assemblage, et plus particulièrement sur un outil de conformation 10 conçu pour l'accueil, la conformation et le bridage, selon une configuration d'assemblage prédéterminée, d'au moins un jeu de pièces détachées 2, 3, 4 devant être assemblées les unes aux autres.

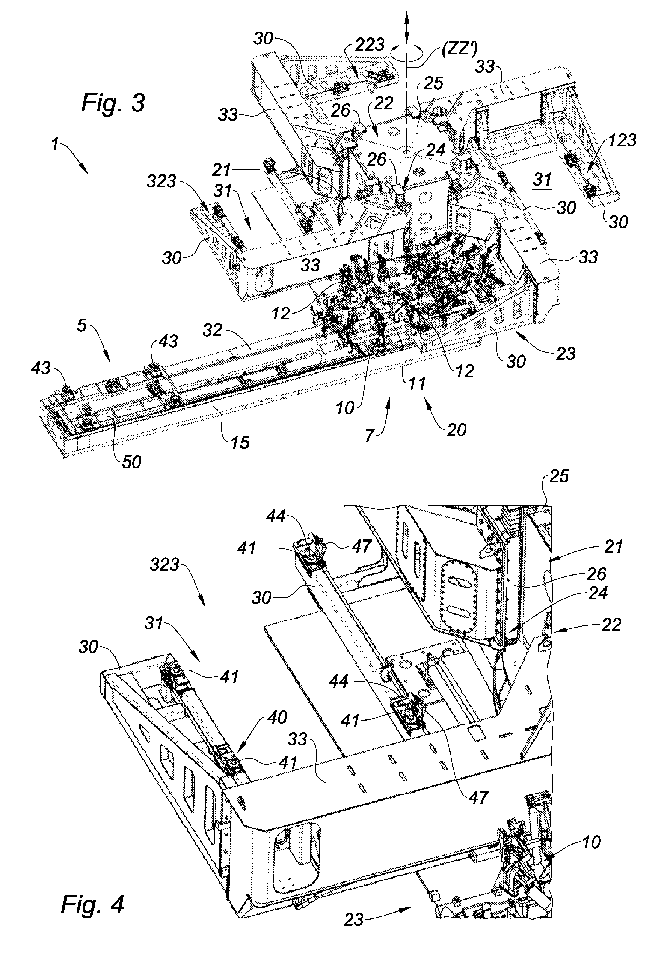

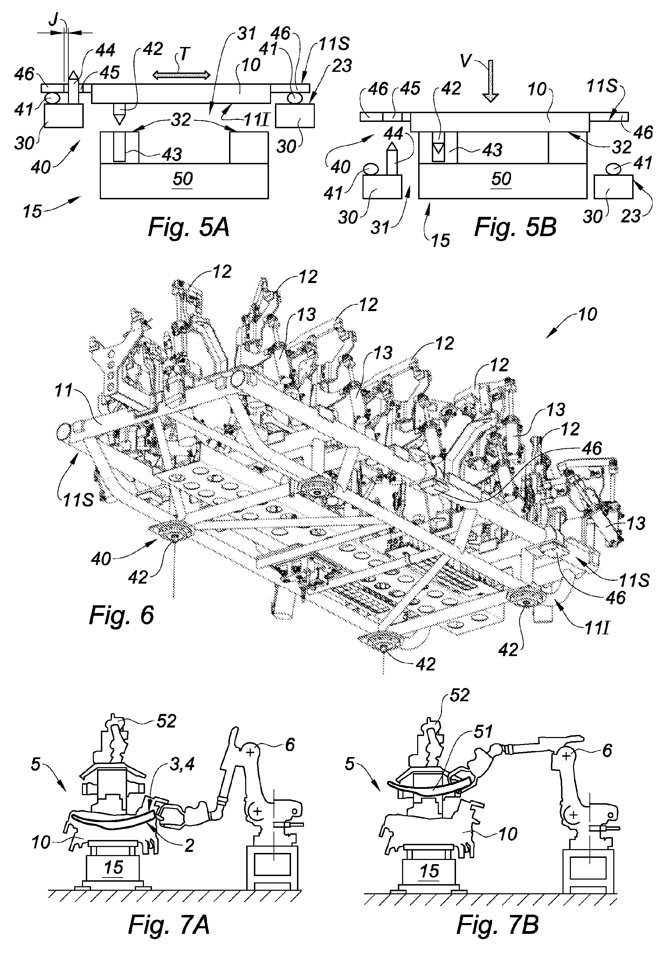

Tel que cela est notamment illustré sur les figures 3 et 6, ledit outil de conformation 10 comprend de préférence un châssis 11 formant embase, qui porte une pluralité d'accessoires de conformation et de bridage 12, du genre chandelles, butées, pinces, sauterelles, mors, etc., destinés à accueillir, positionner et maintenir provisoirement le jeu de pièces 2, 3, 4 à assembler dans sa configuration d'assemblage, en attente du soudage.

Avantageusement, lesdits accessoires 12 peuvent être motorisés, par exemple par des vérins 13, électriques ou pneumatiques, qui permettent d'ajuster leur position, leur hauteur, ou encore de déclencher ou relâcher le serrage des pièces 2, 3, 4.

Par ailleurs, l'outil de conformation 10 est de préférence agencé pour recevoir et brider simultanément (« marier ») l'ensemble des pièces 2, 3, 4 nécessaires à la réalisation du sous-ensemble 51 résultant de l'assemblage, et plus particulièrement l'ensemble des trois pièces susmentionnées (peau 2, anneau avant 3 et anneau arrière 4), de sorte à permettre leur pointage et/ou assemblage sur un même poste d'assemblage 5.

Un tel agencement permet avantageusement de traiter complètement et rapidement la réalisation de l'assemblage après une unique étape de chargement et de conformation, sans changement de repère machine. Il permet également d'économiser de la surface d'implantation au sol en évitant la multiplication des postes d'assemblage et des robots de soudage 6.

De préférence, l'outil 10 sera agencé de sorte à pouvoir accueillir dans cet ordre, et maintenir par une pression exercée par le dessus, d'abord la peau 2, puis l'anneau avant 3 et l'anneau arrière 4, de sorte à présenter l'empilement desdites pièces dans une configuration de travail particulièrement stable, dite « en cuvette ».

L'installation 1 comprend en outre avantageusement un convoyeur 15 permettant d'acheminer, depuis le poste de chargement 7 jusqu'au poste de soudage 5, l'outil de conformation 10 conçu pour l'accueil, la conformation et le bridage, selon une configuration d'assemblage prédéterminée, de l'au moins un jeu de pièces détachées 2, 3, 4 devant être assemblées les unes aux autres.

Selon l'invention, l'installation 1 comporte un poste d'échange automatique 20 d'outil de conformation 10 qui comprend une tourelle rotative élévatrice 21 à axe (ZZ') vertical.

Ladite tourelle 21 possède d'une part un rotor de manutention 22, d'axe de rotation (ZZ') sensiblement vertical, qui présente une pluralité de porte-outils 23, 123, 223, 323 répartis autour dudit axe (ZZ') et conçus pour accueillir chacun un outil de conformation 10, ledit rotor 22 étant agencé de sorte à pouvoir amener sélectivement, par un déplacement angulaire approprié autour de son axe (ZZ'), chaque porte-outil 23, 123, 223, 323 à l'aplomb du convoyeur 15, et d'autre part au moins un organe élévateur 24 permettant de déplacer verticalement au moins le porte-outil 23 situé à l'aplomb du convoyeur 15 de sorte à pouvoir alternativement retirer un outil 10 présent sur ledit convoyeur 15 ou déposer un nouvel outil 10 sur ledit convoyeur 15.

Avantageusement, la tourelle 21 fait ainsi office de magasin rotatif d'outils 10, de type rotonde, possédant une pluralité d'emplacements porte-outil, par exemple au nombre de trois, quatre (figures 1 et 3), ou six, préférentiellement équi-répartis autour de l'axe de rotation (ZZ'), et présentant de préférence des structures et agencements sensiblement identiques, la tourelle présentant ainsi sensiblement une invariance par rotation.

La permutation de l'outil de conformation 10 est avantageusement opérée en amenant, ici en descendant, un porte-outil 23 vide au niveau du convoyeur 15, puis en y engageant l'outil 10 présent sur ledit convoyeur, avant de relever ledit porte-outil pour soulever ledit outil 10 et le séparer du convoyeur, jusqu'à ce que le rotor 22 atteigne une altitude de dégagement suffisante pour permettre à la tourelle de faire tourner solidairement l'ensemble des porte-outils 23, 123, 223, 323 sans interférence avec le convoyeur 15, altitude à laquelle on déclenche la rotation adéquate, horaire ou anti-horaire, le rotor étant de préférence bidirectionnel, jusqu'à ce que le porte-outil 123, 223, 323 embarquant le nouvel outil 10 souhaité se positionne à l'aplomb dudit convoyeur.

La dépose du nouvel outil 10 sur ledit convoyeur 15 est avantageusement réalisée par une simple (re)descente du porte-outil concerné, jusqu'à ce que le nouvel outil 10 entre en contact avec ledit convoyeur et se sépare de ce dernier, pour être ensuite acheminé aux postes de chargement 7 puis d'assemblage 5.

Selon un agencement préférentiel de l'installation 1, tel que cela est illustré sur les figures 1 et 3, on pourra utiliser un emplacement du convoyeur 15 (ci-après désigné comme «plateau 32 ») qui est commun au poste d'échange automatique 20 d'outil et au poste de chargement 7, ce qui permet d'opérer un garnissage immédiat de l'outil 10 nouvellement installé avec les pièces 2, 3, 4 détachées, et de raccourcir les trajets dudit outil 10, au bénéfice de la compacité et de la cadence de l'installation.

A cet effet, le convoyeur 15 pourra s'étendre de façon rectiligne entre une première extrémité correspondant au poste de chargement 7 et une seconde extrémité correspondant au poste d'assemblage 5, la tourelle 21 jouxtant la première extrémité de telle sorte que les porte-outils du rotor 22 puissent chevaucher tangentiellement ladite première extrémité du convoyeur.

Le rotor 22 pourra notamment comporter un fût tournant central 25, sur lequel se rattachent, à la manière de branches sensiblement disposées en étoiles, les porte-outils 23, 123, 223, 323.

De préférence, chaque porte-outil sera individuel, c'est-à-dire conçu pour accueillir exactement un seul outil 10, et plus particulièrement un seul châssis 11 qui pourra être standardisé de sorte à pouvoir occuper indifféremment chacun desdits porte-outils.

L'organe élévateur 24 pourra être formé par tout mécanisme approprié, notamment de translation rectiligne, tel que par exemple un vérin hydraulique ou bien encore un système de crémaillères coopérant avec des pignons ou des vis sans fin, ledit mécanisme pouvant être agencé de sorte à pouvoir déplacer verticalement le fût 25 lui-même, et le cas échéant solidairement l'ensemble des porte-outils 23, 123, 223, 323 qui s'y rattachent, par rapport au sol, et plus particulièrement par rapport au stator de la tourelle, ou bien encore de sorte à permettre le réglage d'altitude différentiel des porte-outil, individuellement ou collectivement, par rapport audit fût 25, lui-même d'altitude fixe.

La liaison entre le fût 25 et chaque porte-outil correspondant pourra être assuré par des colonnes de guidage en translation 26, du genre coulisses ou crémaillères, fixées sur ledit fût 25 et orientée parallèlement à l'axe (ZZ') de rotation, tel que cela est illustré sur les figures 3 et 4.

De préférence, le rotor 22 embarque solidairement, en rotation autour de l'axe de rotation (ZZ') comme en translation verticale le long dudit axe de rotation (ZZ'), l'ensemble des porte-outils 23, 123, 223, 323.

Avantageusement, on peut ainsi utiliser des moyens communs uniques pour la manoeuvre d'ensemble des porte-outils, et par conséquent pour le transport collectif de l'ensemble des outils 10, ce qui permet de disposer d'une importante puissance mécanique centralisée tout en minimisant l'encombrement et la complexité de la tourelle.

En particulier, la tourelle 21, et plus globalement le poste d'échange 20, pourra posséder, et se satisfaire de, seulement deux degrés de liberté, motorisés et contrôlés, l'un en rotation autour de l'axe (ZZ') et l'autre en translation le long du même axe (ZZ')

En outre, un tel agencement permet de disposer d'un rotor 22 bien équilibré et particulièrement robuste.

La fiabilité et la rapidité d'exécution de la tourelle 21, et donc plus globalement de l'installation, s'en trouvent avantageusement améliorées.

Par ailleurs, tel que cela est illustré sur les figures 3 et 4, chaque porte-outil 23, 123, 223, 323 comporte de préférence, au moins, voire exactement, une paire de pelles 30, de préférence sensiblement parallèles, séparées l'une de l'autre par un orifice de dégagement 31 autorisant le passage vertical dudit porte-outil de part et d'autre d'un plateau de réception 32 du convoyeur 15.

Avantageusement, un tel agencement permet un transfert naturel par gravité de l'outil 10, par le dessus, depuis le convoyeur 15 vers le porte-outil 23 et inversement.

Il suffit en effet, pour déposer l'outil 10, que les pelles 30 soient descendues, par exemple à concurrence d'une course à vide de 50 mm ou 60 mm, sous le seuil supérieur du convoyeur 15, c'est-à-dire sous le niveau du plateau 32, en passant latéralement de part et d'autre dudit plateau 32 qui occupe alors, lorsque le porte-outil est en position basse, l'orifice de dégagement 31 compris entre lesdites pelles 30.

Pour reprendre contact avec l'outil 10, puis le décoller du plateau afin de le séparer du convoyeur 15, il suffit de remonter les pelles pour les faire atteindre puis franchir ledit un seuil supérieur du convoyeur, de manière à ce qu'elles reviennent en prise avec le châssis 11 puis soulèvent celui-ci, jusqu'à atteindre une position haute autorisant la manoeuvre de rotation.

Avantageusement, tel que cela est illustré sur la figure 6, le châssis 11 de l'outil 10 pourra présenter une structure étagée, comprenant d'une part une portion de châssis centrale inférieure 11I destinée à venir coopérer avec le convoyeur 15, et plus particulièrement à venir reposer en appui sur le plateau 32, ladite portion inférieure centrale 11I étant bordée par des portions latérales surélevées 11S, formant des rebords d'appui conçus pour être saisis par les pelles 30.

Selon un exemple de réalisation correspondant aux figures 3 et 4, chaque porte-outil 23, 123, 223, 323 pourra comporter au moins une poutre maîtresse 33 reliée au fût central 25, formant une branche sensiblement radiale, et portant au moins une, et de préférence deux pelles 30, par exemple formées par des équerres métalliques, disposées, sensiblement orthoradialement, selon une structure de fourche apte à enjamber le convoyeur 15 dans l'axe de convoyage de ce dernier, et à pouvoir ainsi encadrer le plateau 32 dudit convoyeur en position basse.

Le rotor 22 peut ainsi présenter par exemple un agencement en croix gammée, qui, outre une bonne compacité, présente un fonctionnement très sûr en permettant à chaque porte-outil d'encadrer l'outil qu'il transporte et de le retenir très efficacement, notamment latéralement, contre les effets de la force centrifuge.

Par ailleurs, selon une caractéristique préférentielle l'installation 1 comporte des moyens d'auto-centrage 40 conçus pour ajuster spontanément, lors de la descente du porte-outil 23, 123, 223, 323 et sous l'effet de celle-ci, la position de l'outil de conformation 10 par rapport au convoyeur 15, selon au moins une, et de préférence deux, composante(s) *T* transverse(s) à la composante verticale *V* de déplacement, tel que cela est illustré sur les figures 5A et 5B.

A cet effet, lesdits moyens d'auto-centrage peuvent comprendre de préférence, tel que cela est visible sur les figures 4, 5A, 5B et 6, des organes porteurs non bloquants 41, tels que des billes porteuses, disposés sur le porte-outil, et plus particulièrement sur la face supérieure des pelles 30, de sorte à pouvoir retenir l'outil 10 verticalement tout en autorisant la mobilité horizontale *T* de ce dernier selon un débattement d'ajustement prédéterminé, ainsi qu'au moins un premier organe centreur 42, du genre pion, cône, ou rampe, porté par ledit outil 10 et destiné à coopérer, lors du mouvement vertical *V* d'approche de l'outil, avec un second organe centreur 43 conjugué, associé au repère du convoyeur, pour ajuster progressivement la position transverse dudit outil et ainsi amener celui-ci dans une position de référence prédéterminée dans ledit repère du convoyeur 15.

De préférence, les billes porteuses 41 définissent une liaison de type appui-plan permettant à l'outil 10 de conserver au moins deux degrés de liberté distincts en translation transverse, ici dans un plan horizontal normal à l'axe de rotation (ZZ') de la tourelle, voire un degré de rotation azimutal dans ledit plan, tant que ledit outil 10 repose sur les pelles et ne s'est pas enclenché sur le convoyeur 15.

L'amplitude de débattement captif dudit outil 10 selon lesdits degrés de liberté peut être avantageusement bornée par tout système de butées approprié, et notamment par des pions 44, de préférence fichés dans les pelles 30 au voisinage des billes porteuses 41, et qui viennent pénétrer avec jeu latéral *J* dans un trou 45 ménagé dans un patin 46 correspondant, lui-même fixé sur la face inférieure de la portion supérieure 11I du châssis de sorte à permettre audit châssis 11 de reposer, et plus particulièrement de rouler, sur lesdites billes porteuses 41.

A titre d'exemple, le débattement transverse *T* libre maximal peut être de l'ordre de +/- 0,6 mm à +/- 1 mm, tandis que la précision obtenue lors du centrage effectif, par enclenchement du ou des premiers organes centreur 42 dans le ou les seconds organes centreurs 43 correspondants, peut avantageusement être inférieure ou égale à 0,20 mm (deux dixièmes), et plus particulièrement de l'ordre de +/- 0,10 mm.

La mise en place de l'outil 10 par rapport au convoyeur 15, et donc, ultérieurement, par rapport au repère-machine du poste de chargement 7 et surtout du poste d'assemblage 5, sera donc très précise et parfaitement reproductible, malgré le transfert d'outil d'un support à l'autre, tout en étant avantageusement automatique, simple et économe à réaliser, grâce à un indexage auto-centreur sous l'effet de la gravité.

Par ailleurs, afin d'éviter que l'outil 10 ne soit secoué ou ballotté sur le porte-outil après décollement du convoyeur, et notamment pendant la phase de rotation, par exemple en cas d'arrêt d'urgence de ladite rotation, on pourra avantageusement prévoir des organes de blocage 47, du genre crochets d'encliquetage, cales ou pinces, conçus pour immobiliser ledit outil 10 vis-à-vis dudit porte-outil 23, 123, 223, 323, en condamnant les degrés de liberté transverses susmentionnés.

De préférence, lesdits organes de blocage 47 pourront être actionnés par un système de cames et/ou de tringles (non représenté) agencé pour commander automatiquement, de préférence à l'encontre d'un ressort de rappel, le déverrouillage de l'outil 10 lorsque le porte-outil se rapproche du convoyeur en descendant sous une altitude d'approche prédéterminée, à partir de laquelle il est nécessaire de laisser fonctionner les moyens d'auto-centrage 40, et inversement pour verrouiller, ou laisser verrouiller par le ressort de rappel, l'outil 10 sur le porte-outil lorsque ledit porte-outil l'éloigne du convoyeur 15 au-delà d'une altitude-seuil prédéfinie.

Selon une caractéristique préférentielle le convoyeur 15 comprend un chariot de déplacement 50, de préférence unique, qui est commun à plusieurs outils de conformation 10 interchangeables, ledit chariot 50 étant conçu pour recevoir alternativement, au poste d'échange 20, chaque outil de conformation 10 et transporter l'outil sélectionné aux postes de chargement 7 et d'assemblage 5.

Ainsi, il est possible de faire partager à tous les outils 10, et plus particulièrement à tous les châssis 11, un même chariot 50 de convoyage individuel, unique, qui reste en permanence sur le convoyeur 15 qui assure ses déplacements d'un poste à l'autre, soit selon un mouvement continu suivant un circuit annulaire soit, de préférence, tel que cela est notamment illustré sur la figure 1, selon un mouvement de va-et-vient linéaire, à la manière d'une navette.

Ledit chariot 50 pourra notamment être guidé par des rails, sur lesquels il pourra par exemple rouler au moyen de roues, galets ou rouleaux.

On remarquera que, sur la figure 3, le chariot 50 a été sorti et représenté au poste d'assemblage 5, par simple souci de description, alors qu'il se trouve bien entendu en réalité sous l'outil 10, au poste d'échange 20.

Avantageusement, l'utilisation d'un seul chariot 50 permet de réduire le coût et le poids de l'installation 1, et plus particulièrement d'alléger la masse embarquée sur le rotor 22 de la tourelle 21, puisque le chariot 50 est abandonné à demeure sur le convoyeur 15 dont il fait de préférence partie intégrante, tandis que seul l'outil 10 de conformation, amovible, est destiné à être prélevé dudit convoyeur, par extraction hors dudit chariot, puis manipulé par ladite tourelle.

A titre indicatif, le gain de poids peut atteindre au moins 50% à 60% par outil, des essais ayant en effet montré que l'outil seul pèse généralement à vide moins d'une tonne, et par exemple de l'ordre de 900 kg, tandis que l'ensemble formé par l'outil 10 et un chariot 50 correspondant dépasse généralement les 2 tonnes, et peut notamment atteindre 2,5 tonnes.

On peut ainsi non seulement réduire la consommation d'énergie nécessaire à la manutention des outils et des pièces, mais également accélérer les mouvements d'échange d'outil sans risque que lesdits mouvements soient faussés par des comportement inertiels trop prononcés des outils 10 et/ou de la tourelle 21.

En outre, l'utilisation d'un chariot 50 captif du convoyeur, auquel est donc associé un repère parfaitement défini et stable par rapport aux postes de chargement et d'assemblage, garantit la précision et la reproductibilité de la conformation et du positionnement des pièces 2, 3, 4 sur lesdits postes, le simple empilement auto-centreur de l'outil 10 sur ledit chariot 50 suffisant à faire correspondre les repères de l'outil 10 d'une part et desdits postes 5, 7 d'autre part avec une précision adéquate.

Avantageusement, le chariot 50 d'une part, et les outils de conformation 10, et plus particulièrement les châssis 11, d'autre part, pourront être pourvus d'organes de raccordement réversibles automatiques (non représentés) permettant alternativement le raccordement de l'outil 10, et plus particulièrement de ses accessoires de conformation et de bridage 12, 13, à un ou plusieurs réseaux d'alimentation en énergie disponibles sur le chariot, par exemple électrique et/ou pneumatique, lors de la pose dudit outil 10 sur ledit chariot 50 par la tourelle 21, et la déconnexion dudit outil 10 desdits réseaux lors de l'enlèvement dudit outil par ladite tourelle.

Ces connexions automatiques pourront être réalisées par tout brochage ou raccord auto-obturant approprié, dont les parties mâle et femelle, solidaires respectivement du châssis 11 et du chariot 50, seront agencées de sorte à venir s'emboîter lors de la descente du porte-outil à l'aplomb du convoyeur 15.

L'invention concerne bien entendu également un procédé d'assemblage de pièces de carrosserie comprenant une étape (a) de sélection d'un outil de conformation, au cours de laquelle on met en place sur un convoyeur 15 un outil de conformation 10 conçu pour l'accueil, la conformation et le bridage, selon une configuration d'assemblage prédéterminée, d'au moins un jeu de pièces détachées 2, 3, 4 devant être assemblées les unes aux autres, une étape (b) de chargement au cours de laquelle on met en place les pièces à assembler 2, 3, 4 sur ledit outil de conformation 10 selon ladite configuration d'assemblage, puis une étape (c) d'assemblage au cours de laquelle on fixe lesdites pièces 2, 3, 4 les unes aux autres, par exemple par soudage, selon ladite configuration d'assemblage.

Selon l'invention, l'étape (a) de sélection comprend une sous-étape (a1) de permutation d'outil au cours de laquelle on fait tourner un rotor de manutention 22 d'axe (ZZ') sensiblement vertical possédant une pluralité de porte-outils 23, 123, 223, 323, conçus pour accueillir chacun un outil de conformation 10, de sorte à amener à l'aplomb du convoyeur 15 celui des porte-outils 23 sur lequel est embarqué l'outil de conformation 10 souhaité, puis une sous-étape (a2) de déplacement vertical, de préférence de descente, au cours de laquelle on déplace verticalement le porte-outil 23 de sorte à déposer l'outil de conformation 10 sélectionné sur le convoyeur 15.

Avantageusement, le changement d'altitude du porte-outil permet d'opérer très simplement le transfert, avantageusement accompagné d'un auto-centrage, de l'outil 10 sur le plateau 32 du convoyeur 15, et plus particulièrement du chariot 50, tel que cela est notamment illustré sur les figures 5A et 5B.

Bien entendu, l'étape (a) de sélection pourra être précédée d'une étape d'enlèvement destinée à débarrasser, au poste d'échange 20, le convoyeur 15 de l'outil 10 en place, en extrayant ledit outil du chariot 50.

A cet effet, on sollicite l'organe élévateur 24 pour qu'il remonte progressivement les pelles 30 d'un logement d'outil vide, préalablement placé au niveau du plateau 32, selon une course à vide qui peut être de l'ordre de 50 mm à 60 mm, jusqu'à ce que lesdites pelles 30 accrochent les bords latéraux 11 S du châssis 11, puis, en poursuivant leur mouvement ascendant, soulèvent le châssis 11, et donc l'outil 10 dont il fait partie, jusqu'à ce qu'elles atteignent une altitude de manoeuvre autorisant la rotation d'ensemble des porte-outils.

Tel que cela a été déjà mentionné plus haut, l'étape (a) de sélection comporte de préférence une sous-étape (a3) d'auto-centrage au cours de laquelle on provoque, lors du mouvement vertical d'accostage de l'outil de conformation 10 sur le convoyeur 15, par coopération entre un premier et un second organe centreur 42, 43 associés respectivement audit outil de conformation 10 et audit convoyeur 15, le centrage transverse dudit outil de conformation dans une position de référence prédéterminée dans le repère du convoyeur.

A cet effet, on peut avantageusement convertir, par tout système de doigt, pointe ou rampe oblique approprié, l'effort vertical du poids de l'outil 10 en un effort tranchant qui tend à forcer le déplacement transversal dudit outil 10, en le faisant par exemple rouler sur des billes porteuses 41, afin d'ajuster sa position par rapport à celle du plateau 32.

Par ailleurs, selon une caractéristique préférentielle l'étape (c) d'assemblage comprend une sous-étape (c1) de pointage, au cours de laquelle on fixe les pièces 2, 3, 4 les unes aux autres selon leur configuration d'assemblage par un premier ensemble de points d'attache (figure 7A), puis une sous-étape (c2) d'extraction au cours de laquelle on extrait de l'outil de conformation 10 le sous-ensemble 51 des pièces ainsi pré-assemblées en soulevant ledit sous-ensemble 51 pour le transférer de sa position basse d'origine à une position haute d'altitude supérieure, par exemple à l'aide d'un bras manipulateur 52 prévu à cet effet, puis une sous-étape (c3) de finition au cours de laquelle on complète et on consolide la fixation des pièces 2, 3, 4, au même poste (ici d'assemblage 5), en réalisant un second ensemble de points d'attache en position haute (figure 7B), et ce de préférence au moyen du (ou des) même(s) robot(s) de soudage.

De préférence, le retour de l'outil de conformation 10 jusqu'au poste de chargement 7 et son chargement en nouvelles pièces détachées 2, 3, 4, et/ou l'échange d'outil de conformation 10 s'opère alors au moins en partie en temps masqué, pendant la sous-étape (c3) de finition.

Avantageusement, une telle disposition permet de diminuer le temps de cycle, en débarrassant l'outil 10 des pièces 2, 3, 4 sitôt que l'étape de pointage est réalisée, c'est-à-dire sitôt que le sous-ensemble 51 est formé et maintenu de lui-même par le premier ensemble de points d'attache, sans plus requérir l'assistance des accessoires 12 de bridage qui peuvent donc relâcher leur prise sur lesdites pièces 2, 3, 4 et libérer ledit sous-ensemble 51.

On peut alors achever et renforcer l'assemblage en maintenant le sous-ensemble 51 en l'un quelconque de ses points, le cas échéant avec une précision moins exigeante, simplement à l'aide du bras manipulateur 52.

La finition intervenant sur le même poste d'assemblage 5 que le pointage, on peut avantageusement utiliser les mêmes robots de soudage 6, et ainsi réduire l'emprise au sol, ainsi que les coûts d'implantation et de fonctionnement de l'installation.

Enfin, l'outil de conformation 10 étant libéré très tôt dans le processus d'assemblage, il peut être rapidement échangé et/ou regarni en temps au moins partiellement masqué, ce qui améliore la productivité de la ligne.

A titre indicatif, les inventeurs ont constaté que l'agencement conforme à l'invention permettait de réaliser, par rapport à une implantation linéaire conventionnelle, un gain de superficie de l'ordre de 15 %, des gains de temps de cycle significatifs, avec par exemple des temps de montée/descente des porte-outils inférieurs à 2 s (en l'espèce 1,8 s), et des temps de rotation (+/- 90 deg ou +/- 180 deg) inférieurs à 5 s (4,8 s).

Avantageusement, ce nouvel agencement conforme à l'invention permet notamment de préparer puis d'assembler l'ensemble des (ici trois) pièces 2, 3, 4 formant un côté de caisse en mettant en oeuvre un seul stade de chargement et de conformation, commun à l'ensemble desdites pièces, sur un poste de chargement unique, et avec un outil de conformation commun, ce qui contribue à réduire significativement non seulement le temps de cycle mais également l'emprise au sol de l'installation par rapport aux installations antérieurement connues.

## Revendications

1. Installation (1) destinée à l'assemblage de pièces (2, 3, 4) de carrosserie, ladite installation comprenant au moins un poste d'assemblage (5) pourvu de moyens automatiques d'assemblage (6), du genre robots de soudage, un poste de chargement (7) pourvu de moyens de chargement (8, 9) de pièces destinés à alimenter l'installation en pièces à assembler, un convoyeur (15) permettant d'acheminer, depuis le poste de chargement (7) jusqu'au poste d'assemblage (5), un outil de conformation (10) conçu pour l'accueil, la conformation et le bridage, selon une configuration d'assemblage prédéterminée, d'au moins un jeu de pièces (2, 3, 4) détachées devant être assemblées les unes aux autres, ladite installation étant **caractérisée en ce qu'**elle comporte un poste d'échange automatique (20) d'outil de conformation qui comprend une tourelle rotative élévatrice (21) à axe vertical, ladite tourelle possédant d'une part un rotor de manutention (22), d'axe de rotation (ZZ') sensiblement vertical, qui présente une pluralité de porte-outils (23, 123, 223, 323) répartis autour dudit axe (ZZ') et conçus pour accueillir chacun un outil de conformation (10), ledit rotor (22) étant agencé de sorte à pouvoir amener sélectivement, par un déplacement angulaire approprié autour de son axe, chaque porte-outil (23, 123, 223, 323) à l'aplomb du convoyeur (15), et d'autre part au moins un organe élévateur (24) permettant de déplacer verticalement au moins le porte-outil (23) situé à l'aplomb du convoyeur (15) de sorte à pouvoir alternativement retirer un outil (10) présent sur ledit convoyeur ou déposer un nouvel outil (10) sur ledit convoyeur.

2. Installation selon la revendication 1 **caractérisée en ce que** le rotor (22) embarque solidairement, en rotation autour de l'axe de rotation (ZZ') comme en translation verticale le long dudit axe de rotation (ZZ'), l'ensemble des porte-outils (23, 123, 223, 323).

3. Installation selon la revendication 1 ou 2 **caractérisé en ce que** chaque porte-outil (23, 123, 223, 323) comporte au moins une paire de pelles (30), de préférence sensiblement parallèles, séparées l'une de l'autre par un orifice de dégagement (31) autorisant le passage vertical dudit porte-outil de part et d'autre d'un plateau de réception (32) du convoyeur (15).

4. Installation selon l'une des revendications précédentes **caractérisée en ce qu'**elle comporte des moyens d'auto-centrage (40) conçus pour ajuster spontanément, lors de la descente du porte-outil (23, 123, 223, 323) et sous l'effet de celle-ci, la position de l'outil de conformation (10) par rapport au convoyeur (15), selon au moins une, et de préférence deux, composante(s) (T) transverse(s) à la composante verticale (V) de déplacement, lesdits moyens d'auto-centrage (40) comprenant de préférence des organes porteurs non bloquants, tels que des billes porteuses (41), disposés sur le porte-outil de sorte à pouvoir retenir l'outil (10) verticalement tout en autorisant la mobilité horizontale (T) de ce dernier selon un débattement d'ajustement prédéterminé, ainsi qu'au moins un premier organe centreur (42), du genre pion, cône, ou rampe, porté par ledit outil et destiné à coopérer, lors du mouvement vertical d'approche (V) de l'outil, avec un second organe centreur (43) conjugué associé au repère du convoyeur (15), pour ajuster progressivement la position transverse dudit outil (10) et ainsi amener celui-ci dans une position de référence prédéterminée dans ledit repère du convoyeur.

5. Installation selon l'une des revendications précédentes **caractérisée en ce que** le convoyeur comprend un chariot de déplacement (50), de préférence unique, qui est commun à plusieurs outils de conformation (10) interchangeables, et conçu pour recevoir alternativement, au poste d'échange, chaque outil de conformation et transporter l'outil sélectionné aux postes de chargement (7) et d'assemblage (5).

6. Installation selon la revendication 5 **caractérisée en ce que** le chariot (50) d'une part, et les outils de conformation (10) d'autre part, sont pourvus d'organes de raccordement réversibles automatiques permettant alternativement le raccordement de l'outil (10) à un ou plusieurs réseaux d'alimentation en énergie disponibles sur le chariot (50), par exemple électrique et/ou pneumatique, lors de la pose dudit outil sur ledit chariot par la tourelle (21), et la déconnexion dudit outil (10) desdits réseaux lors de l'enlèvement dudit outil par ladite tourelle.

7. Installation selon l'une des revendications précédentes **caractérisée en ce qu'**elle est destinée à l'assemblage de côtés de caisse comprenant au moins une première pièce (2) de tôle formant peau, une seconde pièce (3) formant renfort, de type anneau avant, et une troisième pièce (4) formant renfort, de type anneau arrière, et **en ce que** l'outil de conformation (10) est agencé pour recevoir et brider simultanément l'ensemble desdites trois pièces (2, 3, 4) de sorte à permettre leur pointage et/ou assemblage sur un même poste d'assemblage (5).

8. Procédé d'assemblage de pièces de carrosserie comprenant une étape (a) de sélection d'un outil de conformation, au cours de laquelle on met en place sur un convoyeur (15) un outil de conformation (10) conçu pour l'accueil, la conformation et le bridage, selon une configuration d'assemblage prédéterminée, d'au moins un jeu de pièces détachées (2, 3, 4) devant être assemblées les unes aux autres, une étape (b) de chargement au cours de laquelle on met en place les pièces à assembler sur ledit outil de conformation selon ladite configuration d'assemblage, puis une étape (c) d'assemblage au cours de laquelle on fixe lesdites pièces les unes aux autres, par exemple par soudage, selon ladite configuration d'assemblage, ledit procédé étant **caractérisé en ce que** l'étape (a) de sélection comprend une sous-étape (a1) de permutation d'outil (10) au cours de laquelle on fait tourner un rotor de manutention (22) d'axe (ZZ') sensiblement vertical possédant une pluralité de porte-outils (23, 123, 223, 323), conçus pour accueillir chacun un outil de conformation (10), de sorte à amener à l'aplomb du convoyeur celui des porte-outils (23) sur lequel est embarqué l'outil de conformation (10) souhaité, puis une sous-étape (a2) de déplacement vertical, de préférence de descente, au cours de laquelle on déplace verticalement le porte-outil (23) de sorte à déposer l'outil de conformation (10) sélectionné sur le convoyeur (15).

9. Procédé selon la revendication 8 **caractérisé en ce que** l'étape de sélection comporte une sous-étape (a3) d'auto-centrage au cours de laquelle on provoque, lors du mouvement vertical d'accostage de l'outil de conformation (10) sur le convoyeur (15), par coopération entre un premier et un second organe centreur (42, 43) associés respectivement audit outil de conformation (10) et audit convoyeur (15), le centrage transverse dudit outil de conformation dans une position de référence prédéterminée dans le repère du convoyeur.

10. Procédé selon la revendication 8 ou 9 **caractérisé en ce que** l'étape (c) d'assemblage comprend une sous-étape (c1) de pointage, au cours de laquelle on fixe les pièces (2, 3, 4) les unes aux autres selon leur configuration d'assemblage par un premier ensemble de points d'attache, puis une sous-étape (c2) d'extraction au cours de laquelle on extrait de l'outil de conformation (10) le sous-ensemble (51) des pièces ainsi pré-assemblées en soulevant ledit sous-ensemble pour le transférer de sa position basse d'origine à une position haute d'altitude supérieure, puis une sous-étape (c3) de finition au cours de laquelle on complète et on consolide la fixation des pièces, au même poste (5), en réalisant un second ensemble de points d'attache en position haute, et **en ce que** le retour de l'outil de conformation (10) jusqu'au poste de chargement (7) et son chargement en nouvelles pièces détachées et/ou l'échange d'outil de conformation (10) s'opère au moins en partie en temps masqué, pendant la sous-étape (c3) de finition.

## Patentansprüche

1. Installation (1), die zur Montage von Karosserieelementen (2, 3, 4) bestimmt ist, wobei die besagte Installation zumindest eine Montagestation (5) umfasst, die mit automatischen Montagemitteln (6), in der Art von Schweißrobotern versehen ist, eine Ladestation (7), die mit Lademitteln (8, 9) von Teilen versehen ist, die dazu bestimmt sind, die Installation mit Teilen zur Montage zu versorgen, ein Förderband (15), mit dem ein Formwerkzeug (10) von der Ladestation (7) bis zur Montagestation (5) befördert werden kann, das je nach vorbestimmter Montagekonfiguration für die Aufnahme, die Gestaltung und das Spannen von zumindest einem Satz an Einzelteilen (2, 3, 4) ausgeführt ist, die miteinander zu montieren sind, wobei die besagte Installation **dadurch gekennzeichnet ist, dass** sie eine automatische Wechselstation (20) für das Formwerkzeug umfasst, die einen drehbaren Hubrevolverkopf (21) mit Vertikalachse umfasst, wobei der besagte Revolver einerseits einen Handhabungsrotor (22) mit einer in etwa vertikalen Rotationsachse (ZZ') besitzt, der eine Vielzahl von Werkzeughaltern (23, 123, 223, 323) aufweist, die um die besagte Achse (ZZ') verteilt und ausgeführt sind, um jeweils ein Formwerkzeug (10) aufzunehmen, wobei der besagte Rotor (22) derart angeordnet ist, dass er selektiv, durch eine geeignete Winkelbewegung um seine Achse jeden Werkzeughalter (23, 123, 223, 323) im Lot zum Förderband heranbringen kann, und andererseits zumindest ein Hubelement (24), mit dem zumindest der Werkzeughalter (23), der sich im Lot zum Förderband (15) befindet, bewegt werden kann, sodass man abwechselnd ein Werkzeug (10), das sich auf dem besagten Förderband befindet, entnehmen kann oder ein neues Werkzeug (10) auf dem besagten Förderband ablegen kann.

2. Installation nach Anspruch 1, **dadurch gekennzeichnet, dass** der Rotor (22) sämtliche Werkzeughalter (23, 123, 223, 323) gemeinsam um die Rotationsachse (ZZ') in Drehung versetzt, sowie entlang der besagten Rotationsachse (ZZ') in die vertikale Richtung bewegt.

3. Installation nach Anspruch 1 oder 2, **dadurch gekennzeichnet, dass** jeder Werkzeughalter (23, 123, 223, 323) zumindest ein vorzugsweise in etwa parallel liegendes Paar an Schaufeln (30) umfasst, die durch eine Auslassöffnung (31) voneinander getrennt sind, die einen vertikalen Durchlass für den besagten Werkzeughalter beiderseits einer Aufnahmeplatte (32) des Förderbandes (15) freigibt.

4. Installation nach einem der vorherigen Ansprüche, **dadurch gekennzeichnet, dass** sie Selbstzentriermittel (40) umfasst, die ausgeführt sind, um spontan die Position des Formwerkzeugs (10) im Verhältnis zum Förderband (15) bei der Abwärtsbewegung des Werkzeughalters (23, 123, 223, 323) und unter Einwirkung derselben, entsprechend zumindest einer, und vorzugsweise zweier Komponente(n) (T) anzupassen, die quer zur vertikalen Fahrkomponente (V) verläuft (verlaufen), wobei die besagten Selbstzentriermittel (40) vorzugsweise nicht blockierende Tragelemente, wie Trageklötze (41) umfassen, die auf dem Werkzeughalter angeordnet sind, sodass sie das Werkzeug (10) vertikal zurückhalten können, und dabei die Bewegungsfreiheit von letzterem in die horizontale Richtung (T) gemäß einem Anpassungsausschlag freigeben, sowie zumindest ein erstes Zentrierelement (42), in der Art eines Stifts, eines Konus oder einer Rampe, das vom besagten Werkzeug getragen wird, und dazu bestimmt ist, bei der vertikalen Zustellbewegung (V) des Werkzeugs mit einem zweiten Zentrierelement (43) zusammenzuwirken, das sich in Verbindung mit der Markierung des Förderbandes (15) anpasst, um nach und nach die Querposition des besagten Werkzeugs (10) anzupassen und dieses somit in eine vorbestimmte Referenzstellung auf der besagten Markierung des Förderbandes zu bringen.

5. Installation nach einem der vorherigen Ansprüche, **dadurch gekennzeichnet, dass** das Förderband einen vorzugsweise einzigen Fahrwagen (50) umfasst, der für mehrere tauschbare Formwerkzeuge (10) derselbe ist, und der ausgeführt ist, um abwechselnd jedes Formwerkzeug in der Wechselstation aufzunehmen, und das ausgewählte Werkzeug zu den Lade- (7) und den Montagestationen (5) zu transportieren.

6. Installation nach Anspruch 5, **dadurch gekennzeichnet, dass** der Wagen (50) einerseits, und die Formwerkzeuge (10) andererseits mit automatischen reversiblen Anschlusselementen versehen sind, mit denen das Werkzeug (10) beim Anbringen des besagten Werkzeugs auf dem Wagen durch den Revolver (21) abwechselnd an ein oder mehrere Energieversorgungsnetze, wie beispielsweise elektrische und/ oder pneumatische Netze, angeschlossen werden kann, die auf dem Wagen (50) verfügbar sind, und das besagte Werkzeug (10) von den besagten Netzen getrennt werden kann, wenn das besagte Werkzeug vom besagten Revolver abgezogen wird.

7. Installation nach einem der vorherigen Ansprüche, **dadurch gekennzeichnet, dass** sie zur Montage von Karosserieseitenteilen bestimmt ist, die zumindest ein erstes Blechteil (2) umfassen, das die Hülle bildet, ein zweites Teil (3), das eine Verstrebung in der Art eines vorderen Ringes bildet, und ein drittes Teil (4), das eine Verstrebung in der Art eines hinteren Ringes bildet, und dadurch, dass das Formwerkzeug (10) angeordnet ist, um zugleich sämtliche der besagten drei Teile (2, 3, 4) aufzunehmen und zu spannen, um deren Punktschweißung und/ oder Montage an einer selben Montagestation (5) zu ermöglichen.

8. Verfahren zur Montage von Karosserieelementen, einen Schritt (a) zur Auswahl eines Formwerkzeugs umfassend, im Laufe dessen man ein Formwerkzeug (10), das je nach vorbestimmter Montagekonfiguration für die Aufnahme, die Gestaltung und das Spannen von zumindest einem Satz an Einzelteilen (2, 3, 4) ausgeführt ist, die miteinander zu montieren sind, auf einem Förderband (15) ablegt, einen Schritt (b) zum Laden, im Laufe dessen man entsprechend der besagten Montagekonfiguration die zu montierenden Teile auf dem besagten Formwerkzeug ablegt, und danach einen Schritt (c) zum Montieren, im Laufe dessen man die besagten Teile entsprechend der Montagekonfiguration beispielsweise durch Schweißen aneinander befestigt, wobei das besagte Verfahren **dadurch gekennzeichnet ist, dass** der Schritt (a) zur Auswahl einen Unterschritt (a1) zum Tausch des Werkzeugs (10) umfasst, im Laufe dessen man einen Handhabungsrotor (22) mit einer in etwa vertikalen Rotationsachse (ZZ'), der eine Vielzahl von Werkzeughaltern (23, 123, 223, 323) aufweist, in Drehung versetzt, die ausgeführt sind, um jeweils ein Formwerkzeug (10) aufzunehmen, um zumindest jenen der Werkzeughalter (23), in dem sich das gewünschte Formwerkzeug (10) befindet, im Lot zum Förderband heranzuführen, und danach einen Unterschritt (a2) für die vertikale, vorzugsweise abwärts führende Bewegung, im Laufe dessen man den Werkzeughalter (23) vertikal verschiebt, sodass das ausgewählte Formwerkzeug (10) auf dem Förderband (15) abgelegt wird.

9. Verfahren nach Anspruch 8, **dadurch gekennzeichnet, dass** der Schritt zur Auswahl einen Unterschritt (a3) zur Selbstzentrierung umfasst, im Laufe dessen man bei der vertikalen Andockbewegung des Formwerkzeugs (10) auf dem Förderband (15) durch Zusammenwirken zwischen einem ersten und einem zweiten Zentrierelement (42, 43), die jeweils dem besagten Formwerkzeug (10) und dem besagten Förderband (15) zugeordnet sind, die Querzentrierung des besagten Formwerkzeugs in eine vorbestimmte Referenzstellung auf der Markierung des Förderbandes bewirkt.

10. Verfahren nach Anspruch 8 oder 9, **dadurch gekennzeichnet, dass** der Schritt (c) zur Montage einen Unterschritt (c1) zum Punktschweißen umfasst, im Laufe dessen man die Teile (2, 3, 4) entsprechend ihrer Montagekonfiguration durch eine erste Einheit an Heftstellen aneinander befestigt, sowie einen Unterschritt (c2) zum Entfernen, im Laufe dessen man aus dem Formwerkzeug (10) die Unterbaugruppe (51) der somit vormontierten Teile entfernt, indem man die besagte Unterbaugruppe anhebt, um sie von ihrer unteren Grundstellung in eine obere Stellung in größerer Höhe zu befördern, und danach einen Unterschritt (c3) zur Endfertigung, im Laufe dessen man die Befestigung der Teile in derselben Station (5) vervollständigt und konsolidiert, indem man eine zweite Einheit an Heftstellen in der oberen Stellung erstellt und dadurch, dass die Rückführung des Formwerkzeugs (10) bis zur Ladestation (7), sowie die Beladung mit neuen Einzelteilen und/ oder der Tausch des Formwerkzeugs (10) zumindest teilweise in maskierter Zeit während des Unterschritts (c3) zur Endfertigung erfolgt.

## Claims

1. Installation (1) intended for the assembly of bodywork parts (2, 3, 4), said installation comprising at least one assembly station (5) provided with automatic assembly means (6), of the welding robot type, a loading station (7) provided with loading means (8, 9) for supplying the installation with parts to be assembled, a conveyor (15) for bringing a conforming tool (10) designed for reception, conformation and clamping of at least one set of spare parts (2, 3, 4) to be assembled to each other in accordance with a predetermined assembly configuration, from the loading station (7) to the assembly station (5), said installation being **characterised in that** it comprises an automatic conformation tool exchange station (20) that includes a vertical axis rotary elevating turret (21), said turret being provided with firstly a handling rotor (22), with an approximately vertical rotation axis (ZZ') that has a plurality of tool holders (23, 123, 223, 323) distributed around said axis (ZZ') and designed so that each holds a conformation tool (10), said rotor (22) being arranged so that it can selectively bring each tool holder (23, 123, 223, 323) vertically in line with the conveyor (15) by an appropriate angular displacement about its axis, and secondly at least one elevating device (24) capable of moving at least the tool holder (23) vertically in line with the conveyor (15), so as to alternately pick up a tool (10) present on said conveyor or put down a new tool (10) on said conveyor.

2. Installation according to claim 1, **characterised in that** the rotor (22) entrains the fixed tool holder assembly (23, 123, 223, 323) in rotation about the rotation axis (ZZ') or in vertical translation along said rotation axis (ZZ').

3. Installation according to claim 1 or 2, **characterised in that** each tool holder (23, 123, 223, 323) comprises at least one pair of shovels (30) preferably approximately parallel to each other, separated from each other by a clearance orifice (31) enabling the vertical passage of said tool holder on each side of a reception tray (32) of the conveyor (15).

4. Installation according to one of the previous claims, **characterised in that** it comprises self-centring means (40) designed to spontaneously adjust the position of the conformation tool (10) relative to the conveyor (15) according to at least one and preferably two components (T) transverse to the vertical movement component (V), as the tool holder (23, 123, 223, 323) descends and as a result of this descent, said self-centring means (40) preferably comprising non-blocking support devices such as support balls (41), located on the tool holder so that the tool (10) can be retained in the vertical direction while allowing horizontal mobility (T) of the tool according to a predetermined adjustment movement distance, and at least a first centring device (42) such as a pin, cone or ramp, supported by said tool and that will cooperate with a second conjugate centring device (43) associated with the mark on the conveyor (15) as the tool makes its vertical approach movement (V), to progressively adjust the transverse position of said tool (10) and thus bring it into a predetermined reference position in said conveyor coordinate system.

5. Installation according to one of the previous claims, **characterised in that** the conveyor comprises a displacement carriage (50), preferably a single carriage, that is common to several interchangeable conformation tools (10), and is designed to alternately hold each conformation tool at the exchange station and transport the selected tool to the loading station (7) and assembly station (5).

6. Installation according to claim 5, **characterised in that** firstly the carriage (50) and secondly the conformation tools (10) are provided with automatic reversible connection devices capable of alternately connecting the tool (10) to one or several power supply networks available on the carriage (50), for example electrical and/or pneumatic supplies, during placement of said tool on said carriage using the turret (21), and disconnection of said tool (10) from said networks when said tool is removed using said turret.

7. Installation according to one of the previous claims, **characterised in that** it will be used for assembly of bodywork sides, comprising at least one first part (2) made of sheet metal forming a skin, a second part (3) forming a reinforcement of the front ring type, and a third part (4) forming a reinforcement of the back ring type, and **in that** the conformation tool (10) is arranged to spontaneously hold and clamp all three said parts (2, 3, 4) so that they can be spot-welded and/or assembled on a single assembly station (5).

8. Method of assembling bodywork parts comprising a step (a) to select a conformation tool, during which a conformation tool (10) designed for reception, conformation and clamping of at least one set of spare parts (2, 3, 4) to be assembled to each other in a predetermined assembly configuration is placed on a conveyor (15), a loading step (b) during which parts to be assembled are placed in said assembly configuration on said conformation tool, then an assembly step (c) during which the parts are fixed to each other in said assembly configuration for example by welding, said method being **characterised in that** the selection step (a) comprises a sub-step (a1) in which tools are exchanged (10) during which a handling rotor (22) with an approximately vertical axis (ZZ') and that has a plurality of tool holders (23, 123, 223, 323) is rotated, each tool holder being designed to hold a conformation tool (10), such that the tool holder holding the required conformation tool (10) is brought vertically above the conveyor, and then a vertical displacement sub-step (a2), preferably a downwards movement step, takes place during which the tool holder (23) descends so as put the selected conformation tool (10) down on the conveyor (15).

9. Method according to claim 8, **characterised in that** the selection step comprises a self-centring sub-step (a3) during which transverse centring of said conformation tool in a predetermined reference position in the coordinate system of the conveyor takes place during the vertical docking movement of the conformation tool (10) on the conveyor (15), by cooperation between a first and a second centring device (42, 43) associated with said conformation tool (10) and said conveyor (15), respectively.

10. Method according to claim 8 or 9, **characterised in that** the assembly step (c) comprises a spot welding sub-step (c1), during which the parts (2, 3, 4) are fixed to each other according to their assembly configuration by a first set of attachment points, then an extraction sub-step (c2) during which the sub-assembly (51) of parts thus pre-assembled is extracted from the conformation tool (10) by lifting said sub-assembly to transfer it from its original low position to a higher position, and then a finishing sub-step (c3) during which the part attachment is completed and consolidated at the same station (5), by making a second set of attachment points in the high position, and **in that** the conformation tool (10) is returned to the loading station (7) and its loading with new parts and/or exchange of the conformation tool (10) take place at least partly in idle time, during the finishing sub-step (c3).
